# EUROPÄISCHE PATENTSCHRIFT

(11) **EP 3 940 215 B1**
(45) Veröffentlichungstag und Bekanntmachung des Hinweises auf die Patenterteilung: **03.04.2024**
(21) Anmeldenummer: 21178661.1
(22) Anmeldetag: 10.06.2021
(51) Int. Cl.: F02D 9/04, F01N 13/00, F02D 9/10, F16K 1/22

(54) **ABGASKLAPPE**
EXHAUST VALVE
CLAPET D'ÉCHAPPEMENT

(30) Priorität: 13.07.2020 DE 102020118356
(43) Veröffentlichungstag der Anmeldung: 19.01.2022
(73) Patentinhaber: Purem GmbH, 66539 Neunkirchen (DE)
(72) Erfinder: Lory, Markus, Stuttgart (DE); Birgler, Markus, Wernau (DE); Grün, Matthias, Altbach (DE); Wacker, Andreas, Plochingen (DE); Zeumer, Annika, Wernau (DE); Schenk, Ralph, Stuttgart (DE); Novosel, Miljenko, Stuttgart (DE)
(74) Vertreter: Ruttensperger Lachnit Trossin Gomoll

(56) Entgegenhaltungen:
- DE-A1-102007 042 328
- DE-A1-102017 127 740
- DE-A1-102018 206 791
- US-A1- 2020 095 946

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende sowie einen Schwenkantrieb für die Schwenkwelle mit einem Antriebsorgan, ferner umfassend eine das Antriebsorgan mit der Schwenkwelle zur gemeinsamen Drehung um die Schwenkachse koppelnde Kopplungsanordnung.

Eine Abgasklappe ist aus der DE 10 2016 114 704 A1 bekannt. Bei dieser Abgasklappe ist die Schwenkwelle in ihren beiden axialen Endbereichen in jeweiligen am Klappenrohr angeordneten Lagerbuchsen bzw. darin angeordneten Schwenklagern um die Schwenkachse schwenkbar getragen. Bei einer durch den Schwenkantrieb ausgelösten Verschwenkung der Schwenkwelle entsteht im Bereich der im Allgemeinen als Gleitlager ausgebildeten Schwenklager Reibung. Diese Reibung kann zu einer Schwingungsanregung der Schwenkwelle und somit insbesondere auch der die Schwenkwelle mit dem Schwenkantrieb koppelnden Kopplungsanordnung führen. Eine derartige Schwingungsanregung im Bereich der Schwenkwelle bzw. der Kopplungsanordnung kann zur Emission von in einem Fahrzeug wahrnehmbarem Schall führen.

Aus der DE 10 2018 206 791 A1 ist eine Abgasklappe gemäß dem Oberbegriff des Anspruchs 1 bekannt. An einem ein Kopplungselement einer Kopplungsanordnung bereitstellenden Hebelarm ist ein federelastisch verformbares Schwingungsdämpfungselement vorgesehen.

Die DE 10 2007 042 328 A1 offenbart eine Abgasklappe, bei welcher an einer Betätigungswelle ein Dämpfungselement vorgesehen ist.

Aus der US 2020/0095946 A1 ist eine Abgasklappe bekannt, bei welcher ein Kopplungselement einen mit einem Antriebsorgan gekoppelten ersten Kopplungsbereich, einen mit einer Schwenkwelle der Abgasklappe gekoppelten zweiten Kopplungsbereich und zwei die beiden Kopplungsbereiche miteinander verbindende Verbindungsbereiche umfasst.

Die DE 10 2017 127 740 A1 offenbart eine Abgasklappe, bei welcher ein Kopplungselement einen mit einem Antriebsorgan gekoppelten ersten Kopplungsbereich, einen mit einer Schwenkwelle der Abgasklappe gekoppelten zweiten Kopplungsbereich und zwei die beiden Kopplungsbereiche miteinander verbindende Verbindungsbereiche umfasst. Im Inneren dieses Kopplungselements ist ein Wärmeabschirmelement angeordnet.

Es ist die Aufgabe der vorliegenden Erfindung, eine Abgasklappe vorzusehen, bei welcher die Abgabe von durch Schwingungen im Bereich der Abgasklappe generiertem Schall effizient unterdrückt wird.

Erfindungsgemäß wird diese Aufgabe gelöst durch eine Abgasklappe, insbesondere für den Abgasstrom einer Brennkraftmaschine, gemäß Anspruch 1. Diese umfasst ein Klappenrohr, eine im Inneren des Klappenrohrs an einer um eine Schwenkachse drehbaren Schwenkwelle getragene Klappenblende sowie einen Schwenkantrieb für die Schwenkwelle mit einem Antriebsorgan, ferner umfassend eine das Antriebsorgan mit der Schwenkwelle zur gemeinsamen Drehung um die Schwenkachse koppelnde Kopplungsanordnung.

Für eine stabile Kopplung der Schwenkwelle mit dem Antriebsorgan umfasst die Kopplungsanordnung ein Kopplungselement mit einem mit dem Antriebsorgan gekoppelten oder zu koppelnden ersten Kopplungsbereich, einem mit der Schwenkwelle gekoppelten oder zu koppelnden zweiten Kopplungsbereich und wenigstens einem den ersten Kopplungsbereich mit dem zweiten Kopplungsbereich verbindenden Verbindungsbereich. Ein derartiges Kopplungselement kann beispielsweise mit Blechmaterial aufgebaut sein und kann in eine im Wesentlichen ringförmige oder U-förmige Gestalt gebogen sein. Das mit beispielsweise ringförmiger oder U-förmiger Gestalt aufgebaute Kopplungselement kann auch aus mehreren miteinander zusammenwirkenden Teilen aufgebaut sein.

Die erfindungsgemäß aufgebaute Abgasklappe zeichnet sich dadurch aus, dass im Bereich der Kopplungsanordnung Schwingungsdämpfungsmaterial angeordnet ist.

Für eine effiziente Wirkung des Schalldämpfungsmaterials ist erfindungsgemäß vorgesehen, dass die beiden Kopplungsbereiche und der wenigstens eine Verbindungsbereich einen Kopplungselement-Innenraum umgeben, und dass wenigstens ein Teil des Schwingungsdämpfungsmaterials im Kopplungselement-Innenraum angeordnet ist.

Um die thermische Abschirmung zwischen dem im Betrieb stark erwärmten Systembereich, also insbesondere der Schwenkwelle und dem Klappenrohr, und dem Schwenkantrieb zu unterstützen, ist bei einer weiteren erfindungsgemäßen Ausgestaltung an einer der Schwenkwelle bzw. dem Klappenrohr zugewandten Seite des zweiten Kopplungsbereichs ein zweites Wärmeabschirmelement vorgesehen. Wenigstens ein Teil des Schwingungsdämpfungsmaterial ist im Bereich des zweiten Wärmeabschirmelements vorgesehen.

Durch das Vorsehen von Schwingungsdämpfungsmaterial im Bereich der Kopplungsanordnung, wird dafür gesorgt, dass im Bereich der Abgasklappe entstehende Schwingungen im Wesentlichen nicht zu einer zur Schallemission führenden Anregung der Kopplungsanordnung führen können bzw. dass von der Kopplungsanordnung emittierter Schall unmittelbar im Bereich der Kopplungsanordnung gedämpft wird.

Für ein ausgeprägtes Dämpfungsverhalten wird vorgeschlagen, dass das Schwingungsdämpfungsmaterial poröses Material umfasst. Als besonders geeignet hat sich dabei der Einsatz von offenporigem Material für das Schwingungsdämpfungsmaterial erwiesen.

Da im Bereich einer derartigen Abgasklappe im Allgemeinen sehr hohe Temperaturen vorherrschen, wird vorgeschlagen, dass das Schwingungsdämpfungsmaterial Drahtmaterial umfasst. Dadurch wird ein temperaturresistenter Aufbau gewährleistet.

Aufgrund einer zum Erhalt einer definierten Dämpfungscharakteristik einstellbaren Struktur für das Drahtmaterial ist es besonders vorteilhaft, wenn das Drahtmaterial Drahtgestrick, Drahtgewirk, Drahtgeflecht, oder Drahtgewebe umfasst. Derartiges Material kann einerseits durch die Auswahl des Draht-Rohmaterials, andererseits durch die Einstellung der Herstellungsparameter mit einer definierten Struktur, insbesondere einer definierten Dichte des Drahtmaterials bereitgestellt werden. Alternativ kann für das Drahtmaterial Draht-Wirrmaterial eingesetzt werden, in welchem ein im Wesentlichen ungeordneter Verlauf der dieses Material bildenden Drahtabschnitte vorliegt. Derartiges Draht-Wirrmaterial kann beispielsweise als sogenannte Drahtwolle bereitgestellt sein.

Um eine thermische Abschirmung zwischen der im Allgemeinen dem Abgasstrom ausgesetzten und dadurch stark erwärmten Schwenkwelle und dem Antriebsorgan erreichen zu können, kann im Kopplungselement-Innenraum ein erstes Wärmeabschirmelement vorgesehen sein. Das im Kopplungselement-Innenraum angeordnete Schwingungsdämpfungsmaterial kann dabei das erste Wärmeabschirmelement derart umgebend angeordnet sein, dass wenigstens ein Teil des im Kopplungselement-Innenraum angeordneten Schwingungsdämpfungsmaterials zwischen dem ersten Wärmeabschirmelement und dem ersten Kopplungsbereich positioniert ist oder/und wenigstens ein Teil des im Kopplungselement-Innenraum angeordneten Schwingungsdämpfungsmaterials zwischen dem ersten Wärmeabschirmelement und dem zweiten Kopplungsbereich angeordnet ist.

Das zweite Wärmeabschirmelement ist vorzugsweise topfartig ausgebildet mit einer dem zweiten Kopplungsbereich zugewandten Bodenwandung und einer an die Bodenwandung anschließenden Umfangswandung, wobei die Bodenwandung und die Umfangswandung einen in Richtung von dem Kopplungselement weg offenen Wärmeabschirmelement-Innenraum umgeben.

Diese topfartige Gestalt des Wärmeabschirmelements kann für die Positionierung von Schalldämpfungsmaterial dadurch genutzt werden, dass wenigstens ein Teil des im Bereich des zweiten Wärmeabschirmelements vorgesehenen Schwingungsdämpfungsmaterials wenigstens teilweise in dem Wärmeabschirmelement-Innenraum angeordnet ist.

Alternativ oder zusätzlich kann wenigstens ein Teil des im Bereich des zweiten Wärmeabschirmelements vorgesehenen Schwingungsdämpfungsmaterials die Umfangswandung an einer vom Wärmeabschirmelement-Innenraum abgewandten Außenseite umgebend angeordnet sein.

Um das Schwingungsdämpfungsmaterial derart an die Kopplungsanordnung anzukoppeln, dass durch die Ankopplung eine Beeinträchtigung der Dämpfungscharakteristik vermieden wird, wird vorgeschlagen, dass das Schwingungsdämpfungsmaterial durch Formschluss an der Kopplungsanordnung gehalten ist.

Hierzu kann beispielsweise an der Kopplungsanordnung wenigstens ein das Schwingungsdämpfungsmaterial übergreifender Formschluss-Haltebereich vorgesehen sein.

Alternativ oder zusätzlich zur Anbindung des Schalldämpfungsmaterials an die Kopplungsanordnung durch Formschluss kann ein fester Verbund dadurch erreicht werden, dass das Schwingungsdämpfungsmaterial durch Materialschluss an der Kopplungsanordnung gehalten ist. Beispielsweise kann dieser Materialschluss durch Schweißen, Löten oder/und Kleben realisiert werden.

Die vorliegende Erfindung wird nachfolgend mit Bezug auf die beiliegenden Figuren detailliert beschrieben. Es zeigt:
- Fig. 1: eine Abgasklappe für den Abgasstrom einer Brennkraftmaschine;
- Fig. 2: einer Kopplungsanordnung für die Abgasklappe der Fig. 1;
- Fig. 3: eine der Fig. 2 entsprechende Darstellung einer alternativen Ausgestaltungsart einer Kopplungsanordnung;
- Fig. 4: eine weitere der Fig. 2 entsprechende Darstellung einer alternativen Ausgestaltungsart der Kopplungsanordnung.

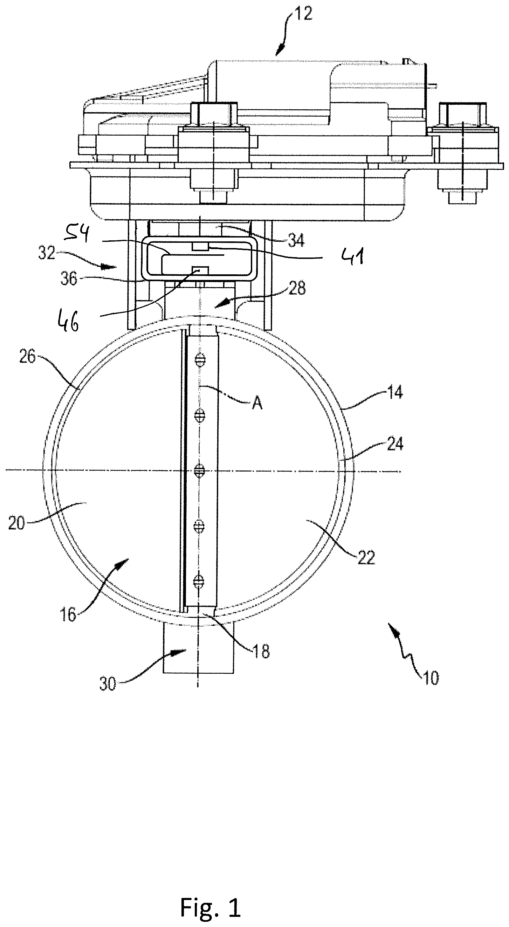

Die Fig. 1 zeigt in Seitenansicht eine allgemein mit 10 bezeichnete und beispielsweise in einer Abgasanlage einer Brennkraftmaschine einsetzbare Abgasklappe mit einem Klappenantrieb 12. Die Abgasklappe 10 umfasst ein Klappenrohr 14, in welchem eine allgemein mit 16 bezeichnete Klappenblende an einer Schwenkwelle 18 um eine Schwenkachse A schwenkbar getragen ist. Die Klappenblende 16 umfasst zwei Klappenflügel 20, 22, welche bei in einer Sperrstellung positionierter Klappenblende 16 an am Innenumfang des Klappenrohrs 14 vorgesehenen Flügelanschlägen 24, 26 anliegen. Die Schwenkwelle 18 ist an ihren beiden axialen Endbereichen 28, 30 bezüglich des Klappenrohrs 14 vermittels jeweiliger Lageranordnungen um die Schwenkachse A drehbar bzw. schwenkbar getragen. In ihrem ersten axialen Endbereich 28 ist die Schwenkwelle 18 vermittels einer nachfolgend beschriebenen Kopplungsanordnung 32 mit einem Antriebsorgan 34 des Klappenantriebs 12, beispielsweise einer Antriebswelle, zur gemeinsamen Drehung gekoppelt. In diesem Bereich kann die Schwenkwelle 18 direkt oder über ein damit drehfestes Bauteil an die Kopplungsanordnung 32 angekoppelt sein.

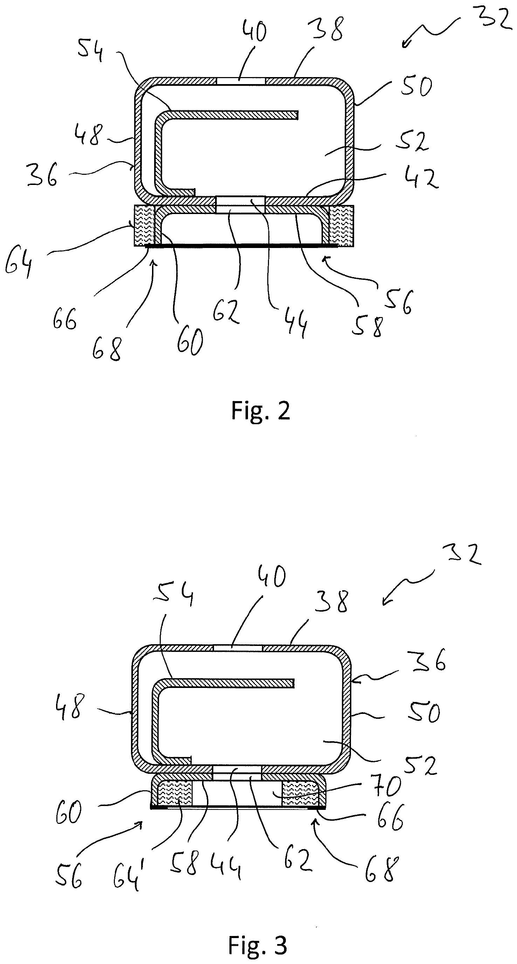

Die in Fig. 1 nur in prinzipartiger Darstellung gezeigte Kopplungsanordnung 32 ist in Fig. 2 detaillierter zu sehen. Die Kopplungsanordnung 32 umfasst ein allgemein mit 36 bezeichnetes und vorzugsweise mit Blechmaterial aufgebautes Kopplungselement. Das Kopplungselement 36 ist in Fig. 2 mit ringartiger Gestalt dargestellt und umfasst einen im Wesentlichen plattenartigen oder ebenen ersten Kopplungsbereich 38, in welchem das Kopplungselement 36 zur gemeinsamen Drehung mit der als Antriebsorgan 34 wirksamen Antriebswelle des Klappenantriebs 12 gekoppelt werden kann. Dazu weist das Kopplungselement 36 in seinem ersten Kopplungsbereich 38 eine Formschluss-Eingriffsöffnung 40 auf, in welche ein am Antriebsorgan 34 vorgesehener Formschluss-Eingriffsvorsprung 41 eingreifend positioniert werden kann, um das Antriebsorgan 34 mit dem Kopplungselement 36 zur gemeinsamen Drehung um die Schwenkachse A zu koppeln.

Entsprechend ist das Kopplungselement 32 mit einem plattenartigen bzw. im Wesentlichen ebenen zweiten Kopplungsbereich 42 aufgebaut, in welchem eine Formschluss-Kopplungsöffnung 44 zur Aufnahme eines komplementär geformten Formschluss-Kopplungsvorsprungs 46 der Schwenkwelle 18 ausgebildet ist, um das Kopplungselement 36 mit der Schwenkwelle 18 zur gemeinsamen Drehung um die Schwenkachse A zu koppeln.

Es ist darauf hinzuweisen, dass das beispielsweise aus gebogenem Blechmaterial aufgebaute Kopplungselement 36 aus einem einzigen Blechstreifen gebogen werden kann, dessen einander gegenüberliegende Endbereiche miteinander beispielsweise materialschlüssig verbunden werden können, um eine geschlossene ringartige Struktur zu erreichen, oder dessen beide Endbereiche einander überlappend positioniert werden können, so dass beispielsweise einer der beiden Kopplungsbereiche 38, 42 durch zwei einander überlappende Endbereiche des zum Aufbau des Kopplungselements 36 vorgesehenen Blechmaterials gebildet ist.

In dem dargestellten Ausgestaltungsbeispiel sind die beiden Kopplungsbereiche 38, 42 durch zwei Verbindungsbereiche 48, 50 miteinander verbunden, um die ringartige Struktur zu erhalten. Bei einer alternativen Ausgestaltungsform könnte ein derartiges Kopplungselement 36 mit U-förmiger Struktur bereitgestellt sein, bei welcher die beiden Kopplungsbereiche 38, 42 dann nur durch einen derartigen Verbindungsbereich 48 oder 50 miteinander verbunden sind.

Um eine thermische Abschirmung zwischen den mit ihren axialen Endbereichen einander gegenüberliegenden Wellen, also der als Antriebsorgan 34 wirkenden Antriebswelle des Klappenantriebs 12 und der Schwenkwelle 18, zu erreichen, ist in einem im Kopplungselement 36 gebildeten und von den beiden Kopplungsbereichen 38, 42 und den beiden Verbindungsbereichen 48, 50 umgebenen Kopplungselement-Innenraum 52 ein erstes Wärmeabschirmelement 54 vorgesehen. Dieses erstreckt sich zwischen den einander gegenüberliegenden Endbereichen der angesprochenen Wellen und verhindert somit eine Wärmeübertragung von der im Betrieb stark erwärmten Schwenkwelle 18 auf das Antriebsorgan 34 durch Wärmestrahlung.

Um eine weiter verbesserte thermische Abschirmung zu erreichen, kann alternativ oder zusätzlich zu dem ersten Wärmeabschirmelement 54 ein beispielsweise ebenfalls aus Blechmaterial aufgebautes zweites Wärmeabschirmelement 56 vorgesehen sein. Dieses ist mit im Wesentlichen topfartiger Struktur ausgebildet und umfasst eine am zweiten Kopplungsbereich 42 an dessen der Schwenkwelle 18 bzw. dem Klappenrohr 14 zugewandter Seite angeordnetes, beispielsweise mit dem Kopplungselement 36 materialschlüssig, also beispielsweise durch Verschweißen, verbundene oder/und zwischen dem Kopplungselement 36 und der Schwenkwelle 18 axial fest gehaltene Bodenwandung 58 und eine im Außenumfangsbereich daran anschließende Umfangswandung 60. Auch dieses zweite Wärmeabschirmelement 56 ist vorzugsweise mit Blechmaterial aufgebaut und weist in Zuordnung zur Formschluss-Eingriffsöffnung 44 im zweiten Kopplungsbereich 42 eine Durchgriffsöffnung 62 auf, so dass die Schwenkwelle 18 mit ihrem an das Kopplungselement 36 anzukoppelnden Endbereich in die Formschluss-Eingriffsöffnung 44 eingeführt werden kann.

Das Kopplungselement 36 kann zwischen den beiden miteinander zu koppelnden Wellen derart angeordnet sein, dass es zwischen diesen unter Vorspannung gehalten ist und somit die einander gegenüberliegenden Endbereiche diese Wellen in Richtung voneinander weg vorspannt. Auf diese Art und Weise kann eine definierte axiale Positionierung für die Schwenkwelle 18 unter Berücksichtigung eines im Allgemeinen unvermeidbar vorhandenen Lagerspiels der diese Schwenkwelle 18 axial lagernden Lageranordnung beispielsweise im Bereich des axialen Endbereichs 28 der Schwenkwelle 18 erreicht werden.

Im Bereich der Kopplungsanordnung 32 ist in Fig. 2 allgemein mit 64 bezeichnetes Schwingungsdämpfungsmaterial vorgesehen. Dieses Schwingungsdämpfungsmaterial 64 ist vorzugsweise mit Drahtmaterial, wie z. B. Drahtgestrick, aufgebaut und weist im dargestellten Ausgestaltungsbeispiel eine die Umfangswandung 60 des zweiten Wärmeabschirmelements 56 umgebende ringartige Struktur auf. Für eine definierte Halterung des Schwingungsdämpfungsmaterials 64 an der Kopplungsanordnung 32 kann die Umfangswandung 60 des zweiten Wärmeabschirmelements 56 wenigstens in Umfangsbereichen derselben nach radial außen umgebogen sein, um mit einem das schwingungsdämpfende Material 64 radial übergreifenden Randbereich 66 einen allgemein mit 68 bezeichneten Formschluss-Haltebereich bereitzustellen. Das schwingungsdämpfende Material 64 ist somit an der Außenumfangsfläche der Umfangswandung 60 anliegend in radialer Richtung bezüglich der Schwenkachse A definiert gehalten und ist zwischen dem Kopplungselement 60 und dem Formschluss-Haltebereich 68 in axialer Richtung der Schwingungsachse A definiert gehalten. Alternativ oder zusätzlich zur Erzeugung des Formschlusses vermittels des Formschluss-Haltebereichs 68 kann das Schwingungsdämpfungsmaterial 64 durch Materialschluss, beispielsweise Schweißen, Löten oder/und Kleben, an der Kopplungsanordnung 32 fest gehalten sein.

Durch das im Bereich der Kopplungsanordnung 32 vorgesehene Schwingungsdämpfungsmaterial 64 wird gewährleistet, dass im Betrieb im Bereich der Abgasklappe 10 entstehende oder auf diese übertragenen Schwingungen nicht zu einer derartigen Schwingungsanregung der Kopplungsanordnung 32, insbesondere des Kopplungselements 36 derselben, führen können, dass in einem Fahrzeug wahrnehmbarer Schall emittiert wird. Weiter kann das Schwingungsdämpfungsmaterial 64 im Bereich der Kopplungsanordnung 32 entstehende und ggf. zu einer Schallemission führende Schwingungsanregungen absorbieren, so dass das Schwingungsdämpfungsmaterial 64 einerseits dazu beiträgt, das Entstehen einer Schwingungsanregung der Kopplungsanordnung 32 grundsätzlich so weit als möglich zu unterbinden, andererseits dazu beiträgt, dann, wenn derartige Schwingungsanregungen auftreten, von der Kopplungsanordnung 32 abgegebenen Schall zu absorbieren.

Das in der in Fig. 2 dargestellten Ausgestaltungsform mit ringartiger Gestalt ausgebildete Schwingungsdämpfungsmaterial ist vorzugsweise in einem zu einer definierten porösen, offenporigen Struktur führenden Herstellungsvorgang, wie z. B. einem Strickvorgang, einem Wirkvorgang, einem Flechtvorgang oder einem Webvorgang, hergestellt. Bei einer derartigen Herstellungsprozedur kann das Schwingungsdämpfungsmaterial 64 mit der erforderlichen ringartig geschlossenen Gestalt mit im Wesentlichen schlauchartiger Struktur bereitgestellt und nachfolgend zum Erhalt der gewünschten Abmessungen und der gewünschten Dichte des in dem Schwingungsdämpfungsmaterial vorhandenen Drahtmaterials bzw. der gewünschten Porosität komprimiert werden.

Eine alternative Ausgestaltungsform ist in Fig. 3 dargestellt. Bei dieser Ausgestaltungsform ist das Schwingungsdämpfungsmaterial 64' in einem von der Bodenwandung 58 und der Umfangswandung 60 des zweiten Wärmeabschirmelements 56 umgebenen Wärmeabschirmelement-Innenraum 70 angeordnet. Für den Hindurchgriff der Schwenkwelle 18 ist auch bei dieser Ausgestaltungsform das Schwingungsdämpfungsmaterial 64' mit ringartiger Struktur ausgebildet. Eine definierte Halterung am zweiten Wärmeabschirmelement 56 durch Formschluss wird auch bei dieser Ausgestaltungsform dadurch erreicht, dass die Umfangswandung 60 zumindest in einem Teil ihres Umfangs zum Bereitstellen eines hier nach radial innen greifenden und den Formschluss-Haltebereich 68 bereitstellenden Randbereichs 66 umgebogen ist. Zwischen diesem Randbereich 66 und der Bodenwandung 58 ist das Schwingungsdämpfungsmaterial 64' in axialer Richtung gehalten. Da das Schwingungsdämpfungsmaterial 64' an der Innenoberfläche der Umfangswandung 60 anliegt, ist es auch in radialer Richtung definiert gehalten.

Es ist darauf hinzuweisen, dass selbstverständlich die in den Fig. 2 und 3 dargestellten Ausgestaltungsformen mit Schwingungsdämpfungsmaterial 64 am Außenumfang des zweiten Wärmeabschirmelements 56 und Schwingungsdämpfungsmaterial 64' am Innenumfang des zweiten Wärmeabschirmelements 56 miteinander kombiniert werden können.

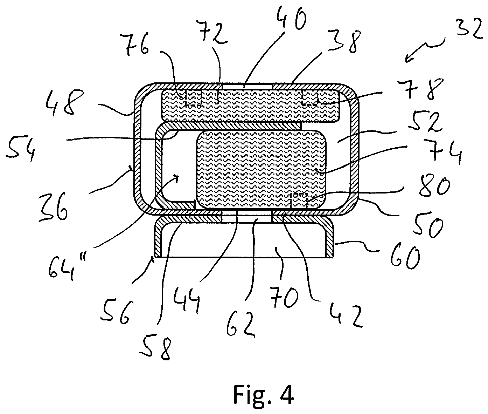

Eine weitere alternative Ausgestaltungsform ist in Fig. 4 dargestellt. Bei dieser Ausgestaltungsform ist das Schwingungsdämpfungsmaterial 64" im Kopplungselement-Innenraum 50 angeordnet. Im dargestellten Ausgestaltungsbeispiel sind zwei Schwingungsdämpfungskörper 72, 74 des Schwingungsdämpfungsmaterials 64" vorgesehen. Der Schwingungsdämpfungskörper 72 liegt zwischen dem ersten Kopplungsbereich 38 und dem ersten Wärmeabschirmelement 54. Der Schwingungsdämpfungskörper 74 liegt zwischen dem ersten Wärmeabschirmelement 54 und dem zweiten Kopplungsbereich 42, wobei ein am zweiten Kopplungsbereich 42 festgelegter Schenkel des ersten Wärmeabschirmelements 54 auch zumindest bereichsweise zwischen dem Schwingungsdämpferkörper 74 und dem zweiten Kopplungsbereich 42 positioniert sein kann.

Man erkennt, dass die beiden Schwingungsdämpfungskörper 72, 74 die Formschluss-Eingriffsöffnungen 40 bzw. 44 in den beiden Kopplungsbereichen 38, 42 überdeckend positioniert sein können. Beim Einschieben der beiden Formschluss-Kopplungsvorsprünge 41, 46 in diese Formschluss-Kopplungsöffnungen 40, 44 kann das Schwingungsdämpfungsmaterial 64" lokal komprimiert werden. Um eine derartige Kompression zu vermeiden, kann das Schwingungsdämpfungsmaterial 64"so bereitgestellt werden, dass es in Zuordnung zu den Formschluss-Eingriffsöffnungen 40, 44 Aussparungen aufweist, um die Formschluss-Kopplungsvorsprünge 41, 46 darin aufnehmen zu können. Beispielsweise können die beiden Schwingungsdämpfungskörper 72, 74 mit ringartiger Struktur bereitgestellt sein.

Alternativ zur Ausgestaltung des Schwingungsdämpfungsmaterials 64" mit zwei oder mehreren Schwingungsdämpfungskörpern 72, 74 könnte im Kopplungselement-Innenraum 50 das Schwingungsdämpfungsmaterial 64" auch mit einem einzigen Schwingungsdämpfungskörper aufgebaut sein, welcher das erste Wärmeabschirmelement 44 umgreift und auf diese Art und Weise so positioniert ist, dass das Schwingungsdämpfungsmaterial 64" zwischen dem ersten Wärmeabschirmelement 54 und dem ersten Kopplungsbereich 38 und zwischen dem ersten Wärmeabschirmelement 54 und dem zweiten Kopplungsbereich 42 liegt.

Um bei der in Fig. 4 dargestellten Ausgestaltungsform das Schwingungsdämpfungsmaterial 64" definiert an der Kopplungsanordnung 32 halten zu können, können beispielsweise an den beiden Kopplungsbereichen 38, 42 Haltelaschen 76, 78, 80 vorgesehen sein, die an den quer zur Schwenkachse A gelegenen Seitenrandbereichen des Kopplungselements 36 das Schwingungsdämpfungsmaterial 64" übergreifen, um auf diese Art und Weise einen Formschluss-Haltebereich 68 bereitzustellen. Somit wird auch bei dieser Ausgestaltungsform eine Beeinträchtigung der porösen Struktur des Schwingungsdämpfungsmaterials 64" beispielsweise durch Verschweißung des Schwingungsdämpfungsmaterials 64" mit dem Kopplungselement 36 vermieden.

Es ist darauf hinzuweisen, dass auch die in Fig. 4 dargestellte Ausgestaltungsform mit der Ausgestaltungsform der Fig. 2 oder/und der Ausgestaltungsform der Fig. 3 kombiniert werden kann.

## Patentansprüche

1. Abgasklappe, insbesondere für den Abgasstrom einer Brennkraftmaschine, umfassend ein Klappenrohr (14), eine im Inneren des Klappenrohrs (14) an einer um eine Schwenkachse (A) drehbaren Schwenkwelle (18) getragene Klappenblende (16) sowie einen Schwenkantrieb (12) für die Schwenkwelle (18) mit einem Antriebsorgan (34), ferner umfassend eine das Antriebsorgan (34) mit der Schwenkwelle (18) zur gemeinsamen Drehung um die Schwenkachse (A) koppelnde Kopplungsanordnung (32), wobei die Kopplungsanordnung (32) ein Kopplungselement (36) mit einem mit dem Antriebsorgan (34) gekoppelten oder zu koppelnden ersten Kopplungsbereich (38), einem mit der Schwenkwelle (18) gekoppelten oder zu koppelnden zweiten Kopplungsbereich (42) und wenigstens einem den ersten Kopplungsbereich (38) mit dem zweiten Kopplungsbereich (42) verbindenden Verbindungsbereich (48, 50) umfasst, wobei im Bereich der Kopplungsanordnung (32) Schwingungsdämpfungsmaterial (64; 64'; 64") angeordnet ist, **dadurch gekennzeichnet,**
**dass** die beiden Kopplungsbereiche (38, 42) und der wenigstens eine Verbindungsbereich (48, 50) einen Kopplungselement-Innenraum (57) umgeben, und dass wenigstens ein Teil des Schwingungsdämpfungsmaterials (64") im Kopplungselement-Innenraum (51) angeordnet ist,
oder/und
**dass** an einer der Schwenkwelle (18) zugewandten Seite des zweiten Kopplungsbereichs (42) ein zweites Wärmeabschirmelement (56) vorgesehen ist, und dass wenigstens ein Teil des Schwingungsdämpfungsmaterial (64; 64') im Bereich des zweiten Wärmeabschirmelements (56) vorgesehen ist.

2. Abgasklappe nach Anspruch 1, **dadurch gekennzeichnet, dass** das Schwingungsdämpfungsmaterial (64; 64'; 64") poröses Material umfasst.

3. Abgasklappe nach Anspruch 2, **dadurch gekennzeichnet, dass** das Schwingungsdämpfungsmaterial (64; 64'; 64") offenporiges Material umfasst.

4. Abgasklappe nach einem der vorangehenden Ansprüche, **dadurch gekennzeichnet, dass** das Schwingungsdämpfungsmaterial (64; 64'; 64") Drahtmaterial umfasst.

5. Abgasklappe nach Anspruch 4, **dadurch gekennzeichnet, dass** das Drahtmaterial Drahtgestrick, Drahtgewirk, Drahtgeflecht, Drahtgewebe oder Draht-Wirrmaterial umfasst.

6. Abgasklappe nach einem der Ansprüche 1-5, **dadurch gekennzeichnet, dass** im Kopplungselement-Innenraum (52) ein erstes Wärmeabschirmelement (54) vorgesehen ist, und dass das im Kopplungselement-Innenraum (52) angeordnete Schwingungsdämpfungsmaterial (64") das erste Wärmeabschirmelement (54) derart umgebend angeordnet ist, dass wenigstens ein Teil des im Kopplungselement-Innenraum (52) angeordneten Schwingungsdämpfungsmaterials (64") zwischen dem ersten Wärmeabschirmelement (54) und dem ersten Kopplungsbereich (38) positioniert ist oder/und wenigstens ein Teil des im Kopplungselement-Innenraum (52) angeordneten Schwingungsdämpfungsmaterials (64") zwischen dem ersten Wärmeabschirmelement (54) und dem zweiten Kopplungsbereich (42) angeordnet ist.

7. Abgasklappe nach einem der Ansprüche 1-6, **dadurch gekennzeichnet, dass** das zweite Wärmeabschirmelement (56) topfartig ausgebildet ist mit einer dem zweiten Kopplungsbereich (42) zugewandten Bodenwandung (58) und einer an die Bodenwandung (58) anschließenden Umfangswandung (60), wobei die Bodenwandung (58) und die Umfangswandung (60) einen in Richtung von dem Kopplungselement (36) weg offenen Wärmeabschirmelement-Innenraum (70) umgeben.

8. Abgasklappe nach Anspruch 7, **dadurch gekennzeichnet, dass** wenigstens ein Teil des im Bereich des zweiten Wärmeabschirmelements (56) vorgesehenen Schwingungsdämpfungsmaterials (64') wenigstens teilweise in dem Wärmeabschirmelement-Innenraum (70) angeordnet ist.

9. Abgasklappe nach Anspruch 7 oder 8, **dadurch gekennzeichnet, dass** wenigstens ein Teil des im Bereich des zweiten Wärmeabschirmelements (56) vorgesehenen Schwingungsdämpfungsmaterials (64) die Umfangswandung (60) an einer vom Wärmeabschirmelement-Innenraum (70) abgewandten Außenseite umgebend angeordnet ist.

10. Abgasklappe nach einem der vorangehenden Ansprüche, **dadurch gekennzeichnet, dass** das Schwingungsdämpfungsmaterial (64; 64'; 64") durch Formschluss an der Kopplungsanordnung (32) gehalten ist.

11. Abgasklappe nach Anspruch 10, **dadurch gekennzeichnet, dass** an der Kopplungsanordnung (32) wenigstens ein das Schwingungsdämpfungsmaterial (64; 64'; 64") übergreifender Formschluss-Haltebereich (68) vorgesehen ist.

12. Abgasklappe nach einem der vorangehenden Ansprüche, **dadurch gekennzeichnet, dass** das Schwingungsdämpfungsmaterial (64; 64'; 64") durch Materialschluss an der Kopplungsanordnung (32) gehalten ist.

## Claims

1. An exhaust-gas flap, in particular for the exhaust-gas flow of an internal combustion engine, comprising a flap pipe (14), a flap plate (16) that is supported, in the interior of the flap pipe (14), on a pivot shaft (18) that is rotatable about a pivot axis (A), and a pivoting drive (12) for the pivot shaft (18) with a drive element (34), furthermore comprising a coupling arrangement (32) which couples the drive element (34) to the pivot shaft (18) for conjoint rotation about the pivot axis (A), wherein the coupling arrangement (32) comprises a coupling element (36) with a first coupling region (38), which is coupled or provided for coupling to the drive element (34), with a second coupling region (42), which is coupled or provided for coupling to the pivot shaft (18), and with at least one connecting region (48, 50), which connects the first coupling region (38) to the second coupling region (42), wherein vibration-damping material (64; 64'; 64") is arranged in the region of the coupling arrangement (32), **characterized in that**,
the two coupling regions (38, 42) and the at least one connecting region (48, 50) surround a coupling element interior space (57), and that at least a part of the vibration-damping material (64") is arranged in the coupling element interior space (51),
and/or
**in that** a second heat shield element (56) is provided on a side of the second coupling region (42) facing toward the pivot shaft (18), and that at least a part of the vibration-damping material (64; 64') is provided in the region of the second heat shield element (56).

2. The exhaust-gas flap as claimed in claim 1, **characterized in that** the vibration-damping material (64; 64'; 64") comprises porous material.

3. The exhaust-gas flap as claimed in claim 2, **characterized in that** the vibration-damping material (64; 64'; 64") comprises open-pore material.

4. The exhaust-gas flap as claimed in any of the preceding claims, **characterized in that** the vibration-damping material (64; 64'; 64") comprises wire material.

5. The exhaust-gas flap as claimed in claim 4, **characterized in that** the wire material comprises weft-knitted wire, warp-knitted wire, braided wire, woven wire or irregular wire material.

6. The exhaust-gas flap as claimed in one of the claims 1 to 5, **characterized in that** a first heat shield element (54) is provided in the coupling element interior space (52), and that the vibration-damping material (64") arranged in the coupling element interior space (52) is arranged so as to surround the first heat shield element (54) such that at least a part of the vibration-damping material (64") arranged in the coupling element interior space (52) is positioned between the first heat shield element (54) and the first coupling region (38) and/or at least a part of the vibration-damping material (64") arranged in the coupling element interior space (52) is arranged between the first heat shield element (54) and the second coupling region (42).

7. The exhaust-gas flap as claimed in one of the claims 1 to 6, **characterized in that** the second heat shield element (56) is of pot-like form with a base wall (58), which faces toward the second coupling region (42), and with a peripheral wall (60), which adjoins the base wall (58), the base wall (58) and the peripheral wall (60) surrounding a heat shield element interior space (70) which is open in a direction away from the coupling element (36).

8. The exhaust-gas flap as claimed in claim 7, **characterized in that** at least a part of the vibration-damping material (64') provided in the region of the second heat shield element (56) is arranged at least partially in the heat shield element interior space (70).

9. The exhaust-gas flap as claimed in claim 7 or 8, **characterized in that** at least a part of the vibration-damping material (64) provided in the region of the second heat shield element (56) is arranged so as to surround the peripheral wall (60) at an outer side facing away from the heat shield element interior space (70).

10. The exhaust-gas flap as claimed in any of the preceding claims, **characterized in that** the vibration-damping material (64; 64'; 64") is held on the coupling arrangement (32) by positive locking.

11. The exhaust-gas flap as claimed in claim 10, **characterized in that**, on the coupling arrangement (32), there is provided at least one positive-locking holding region (68) which engages over the vibration-damping material (64; 64'; 64").

12. The exhaust-gas flap as claimed in any of the preceding claims, **characterized in that** the vibration-damping material (64; 64'; 64") is held on the coupling arrangement (32) by material cohesion.

## Revendications

1. Un clapet de gaz d'échappement, en particulier pour le flux de gaz d'échappement d'un moteur à combustion interne, comprenant un tuyau de clapet (14), une plaque de clapet (16) qui est supportée, à l'intérieur du tuyau de clapet (14), sur un arbre pivot (18) qui est rotatif autour d'un axe de pivotement (A), et un entraînement pivotant (12) pour l'arbre pivot (18) avec un élément d'entraînement (34), comprenant en outre un dispositif d'accouplement (32) qui couple l'élément d'entraînement (34) à l'arbre pivot (18) pour une rotation conjointe autour de l'axe de pivotement (A), dans lequel le dispositif d'accouplement (32) comprend un élément d'accouplement (36) avec une première zone d'accouplement (38), qui est couplée ou prévue pour le couplage à l'élément d'entraînement (34), avec une deuxième zone d'accouplement (42), qui est couplée ou prévue pour le couplage à l'arbre pivot (18), et avec au moins une zone de connexion (48, 50), qui relie la première zone d'accouplement (38) à la deuxième zone d'accouplement (42), dans lequel un matériau d'amortissement des vibrations (64 ; 64' ; 64") est disposé dans la zone du dispositif d'accouplement (32),
**caractérisé en ce que**,
les deux zones d'accouplement (38, 42) et ledit au moins une zone de connexion (48, 50) entourent un espace intérieur d'élément d'accouplement (57), et **en ce qu'**au moins une partie du matériau d'amortissement des vibrations (64") est disposée dans l'espace intérieur de l'élément d'accouplement (51),
et/ou
**en ce que**'un deuxième élément de protection thermique (56) est prévu sur un côté de la deuxième zone d'accouplement (42) orienté vers l'arbre pivot (18), et **en ce qu'**au moins une partie du matériau d'amortissement des vibrations (64 ; 64') est disposée dans la zone du deuxième élément de protection thermique (56).

2. Le clapet de gaz d'échappement selon la revendication 1, **caractérisé en ce que** le matériau d'amortissement des vibrations (64 ; 64' ; 64") comprend un matériau poreux.

3. Le clapet de gaz d'échappement selon la revendication 2, **caractérisé en ce que** le matériau d'amortissement des vibrations (64 ; 64' ; 64") comprend un matériau à pores ouvertes.

4. Le clapet de gaz d'échappement selon l'une des revendications précédentes, **caractérisé en ce que** le matériau d'amortissement des vibrations (64 ; 64' ; 64") comprend un matériau filaire.

5. Le clapet de gaz d'échappement selon la revendication 4, **caractérisé en ce que** le matériau filaire comprend du fil tricoté en trame, du fil tricoté en chaîne, du fil tressé, du fil tissé ou du matériau filaire irrégulier.

6. Le clapet de gaz d'échappement selon l'une des revendications 1 à 5, **caractérisé en ce qu'**un premier élément de protection thermique (54) est prévu dans l'espace intérieur de l'élément d'accouplement (52), et **en ce que** le matériau d'amortissement des vibrations (64") disposé dans l'espace intérieur de l'élément d'accouplement (52) est disposé de manière à entourer le premier élément de protection thermique (54) de sorte qu'au moins une partie du matériau d'amortissement des vibrations (64") disposé dans l'espace intérieur de l'élément d'accouplement (52) est positionné entre le premier élément de protection thermique (54) et la première zone d'accouplement (38) et/ou au moins une partie du matériau d'amortissement des vibrations (64") disposé dans l'espace intérieur de l'élément d'accouplement (52) est disposé entre le premier élément de protection thermique (54) et la deuxième zone d'accouplement (42).

7. Le clapet de gaz d'échappement selon l'une des revendications 1 à 6, **caractérisé en ce que** le deuxième élément de protection thermique (56) a la forme d'un pot avec une paroi de fond (58) orientée vers la deuxième zone d'accouplement (42) et avec une paroi périphérique (60) adjacente à la paroi de fond (58), la paroi de fond (58) et la paroi périphérique (60) entourant un espace intérieur de l'élément de protection thermique (70) ouvert dans une direction opposée à l'élément d'accouplement (36).

8. Le clapet de gaz d'échappement selon la revendication 7, **caractérisé en ce qu'**au moins une partie du matériau d'amortissement des vibrations (64') fourni dans la zone du deuxième élément de protection thermique (56) est disposée au moins partiellement dans l'espace intérieur de l'élément de protection thermique (70).

9. Le clapet de gaz d'échappement selon la revendication 7 ou 8, **caractérisé en ce qu'**au moins une partie du matériau d'amortissement des vibrations (64) fourni dans la zone du deuxième élément de protection thermique (56) est disposé de manière à entourer la paroi périphérique (60) sur un côté extérieur opposé à l'espace intérieur de l'élément de protection thermique (70).

10. Le clapet de gaz d'échappement selon l'une des revendications précédentes, **caractérisé en ce que** le matériau d'amortissement des vibrations (64 ; 64' ; 64") est maintenu sur le dispositif d'accouplement (32) par verrouillage positif.

11. Le clapet de gaz d'échappement selon la revendication 10, **caractérisé en ce que**, sur le dispositif d'accouplement (32), il y a au moins une zone de maintien à verrouillage positif (68) qui s'engage sur le matériau d'amortissement des vibrations (64; 64' ; 64").

12. Le clapet de gaz d'échappement selon l'une des revendications précédentes, **caractérisé en ce que** le matériau d'amortissement des vibrations (64 ; 64' ; 64") est maintenu sur le dispositif d'accouplement (32) par cohésion de matériau.
